# FASCICULE DE BREVET EUROPEEN

(11) **EP 1 761 199 B1**
(45) Date de publication et mention de la délivrance du brevet: **29.08.2007**
(21) Numéro de dépôt: 05769246.9
(22) Date de dépôt: 04.05.2005
(51) Int. Cl.: A61C 17/20, A61C 3/03

(54) **INSTRUMENT DENTAIRE A ULTRASONS**
DENTALES ULTRASCHALLWERKZEUG
ULTRASONIC DENTAL TOOL

(30) Priorité: 05.05.2004 FR 0404835
(43) Date de publication de la demande: 14.03.2007
(73) Titulaire: Société pour la Conception des Applications des Techniques Electroniques - SATELEC, 33700 Mérignac (FR)
(72) Inventeur: DIERAS, Francis, F-33000 Bordeaux (FR); LEPETITCORPS, Yann, F-33850 Leognan (FR)
(74) Mandataire: Lamoureux, Bernard
(86) Numéro de dépôt international: PCT/FR2005/001122
(87) Numéro de publication internationale: WO 2005/120389

(56) Documents cités:
- US-A- 5 567 153
- US-B1- 6 227 853

## Description

La présente invention concerne un instrument dentaire à ultrasons et plus particulièrement un instrument destiné à des utilisations dans le domaine de la parodontologie et de l'endodontie.

On sait que le détartrage, qui est un acte courant dans le domaine de la dentisterie et qui est pratiqué dans le cadre de traitements prophylactiques, consiste à enlever le tartre présent sur les surfaces dentaires au moyen d'un instrument manuel ou mécanisé notamment un instrument mis en mouvement par des ultrasons, comme celui décrit dans le document US 6227853.

On sait également que le traitement parodontal a pour objet d'éliminer la plaque bactérienne qui est située sous la gencive et qui, constituée de tartre et de toxines, constitue un des facteurs étiologiques des lésions inflammatoires du parodonte pouvant conduire à terme à la chute des dents.

On avait autrefois pour habitude de procéder à un surfaçage radiculaire consistant à éliminer le cément recouvrant la racine de la dent dans sa partie sous-gingivale et la dentine toxifiée dont les bactéries produisent des endotoxines comme les liposaccharides issues de la paroi des bactéries GRAM négatives. Ces liposaccharides exercent en effet une action inhibitrice sur les fibroplastes gingivaux indispensables au maintien du parodonte. Des études récentes ont cependant montré que ces endotoxines adhéraient faiblement à la surface radiculaire, ne pénétraient pas le cément et donc qu'il n'était pas nécessaire d'exercer une pression excessive sur les parois à traiter. Ces résultats ont confirmé par ailleurs qu'il était inutile de procéder à une exérèse du cément.

C'est pourquoi, les praticiens ont désormais abandonné le surfaçage radiculaire, considéré comme trop agressif, au profit du débridement du parodonte. Cette intervention permet d'obtenir une décontamination efficace de la surface radiculaire et garantit une élimination acceptable des agents toxiques. Pour être efficace, le débridement sous gingival est la plupart du temps accompagné du traitement des furcations à savoir celui des parois internes des racines des dents pluri radiculées telles que les molaires ou les prémolaires.

Pour réaliser un tel traitement, les instruments manuels du type de la curette de Gracey ont peu à peu été remplacés par des instruments mécanisés mis en mouvement par des ultrasons de haute intensité se situant dans des fréquences comprises entre 25.000 et 35.000 Hz. De tels appareils, décrits abondamment dans l'état antérieur de la technique, sont essentiellement constitués d'un générateur à ultrasons fournissant l'énergie à un transducteur magnétostrictif ou piézo-électrique qui assure le déplacement d'un outil métallique amovible dénommé insert.

L'actionnement par ultrasons de ces inserts confère aux praticiens la possibilité d'adopter des gestes opératoires qui sont à la fois extrêmement précis et en mesure de développer une énergie leur permettant d'effectuer les traitements plus rapidement et avec une grande efficacité. Il a été par ailleurs constaté que le déplacement des inserts dans un milieu liquide constitué par le liquide d'irrigation a pour effet de générer un effet de cavitation permettant de réaliser un nettoyage éliminant de façon efficace les compressions sous gingivales pathogènes.

On comprendra ainsi que les inserts sont donc des outils qui doivent satisfaire à plusieurs types de contraintes spécifiques. Ils doivent en effet tout d'abord être en mesure de prendre les formes les plus diverses afin de permettre au praticien de travailler dans des zones dont l'accès est souvent difficile. Ils doivent ensuite présenter des parties de faibles dimensions qui sont appropriées aux zones à traiter des dents d'un patient. Ils doivent de plus permettre de contrôler de façon précise la transmission de l'énergie ultrasonore qu'ils reçoivent par leur extrémité postérieure pour la transmettre à leur extrémité active. Ils doivent enfin être biocompatibles.

On comprend dans ces conditions que les alliages qui sont utilisables pour constituer de tels inserts se doivent également de posséder des caractéristiques mécaniques bien spécifiques.

On connaît, dans l'état antérieur de la technique, des inserts de ce type à base de titane et d'aluminium possédant à la fois la souplesse requise pour une utilisation dans le domaine dentaire et notamment dans celui du domaine de la parodontologie et qui sont aptes à re-transmettre de façon particulièrement efficace l'énergie reçue.

La présente invention a pour but de proposer un instrument dentaire comportant à là fois une souplesse appropriée aux opérations de parodontologie, et d'endodontie ou de prophylaxie et une transmission optimale de l'énergie ultrasonore.

La présente invention a ainsi pour objet un instrument dentaire, ou insert, du type mis en mouvement par des vibrations ultrasonores et constitué d'un alliage à base de titane et d'aluminium, caractérisé en ce qu'il comprend, en tant que composant, au moins un élément biocompatible bétagène constitué de niobium et/ou de molybdène et/ou de tantale apte à générer au moins 40% de phase cristalline de structure cubique centrée.

Lorsque cet élément bétagène est constitué de niobium, son pourcentage en valeur massique dans l'alliage sera préférentiellement de 7%. La présente invention permet ainsi de réaliser notamment un alliage dont la formule est Ti₆Al₇Nb.

Suivant l'invention, la structure cristalline de l'alliage sera préférentiellement telle que les grains de celui-ci auront une dimension inférieure à 10 micromètres.

On décrira ci-après, à titre d'exemple non limitatif, une forme d'exécution de la présente invention, en référence au dessin annexé sur lequel :
La figure 1 est une vue d'un instrument dentaire, ou insert, suivant l'invention, disposé sur une pièce à main ultrasonore.
La figure 2 est une vue en plan avec coupe partielle d'un insert de parodontologie suivant l'invention destiné à effectuer un traitement sous-gingival.

Les études et essais divers menés dans le cadre de la conception de la présente invention ont permis d'établir qu'il existe une corrélation entre la faculté pour un insert de transmettre l'énergie ultrasonore et la structure atomique de l'alliage utilisé à la réalisation de celui-ci. Plus précisément il a été établi que l'existence d'une structure cristalline combinée à une prépondérance de celle-ci en phase β (ou, pour un alliage de titane la prépondérance en phase cristalline de structure cubique centrée) conférait à cet alliage une isotropie telle qu'elle assurait une transmission efficace de l'énergie ultrasonore. On a par ailleurs constaté que le caractère isotrope de l'alliage avait pour effet de lui conférer une faible granulométrie contribuant à l'amélioration de la transmission obtenue.

Les essais qui ont été effectués dans le cadre de la présente invention ont établi que des éléments (dits ci-après "bétagènes") tels que le niobium, le molybdène et le tantale lorsqu'ils étaient associés à une base constituée de titane comportant un faible pourcentage d'aluminium (de l'ordre de 6% en masse) avaient la propriété de conférer à l'alliage une structure cristalline comportant une majorité de structure cubique centrée donnant à cet alliage une transmission particulièrement efficace des ultrasons.

On a ainsi réalisé des inserts dans un alliage Ti₆Al₇Nb, c'est-à-dire un alliage à base de titane comportant en pourcentage massique 6% d'aluminium et 7% de niobium. On a constaté, en cours de travail in situ, que ces inserts en comparaison avec des inserts de mêmes forme et dimension avaient l'avantage de transmettre des puissances supérieures tout en conservant des qualités de souplesse appropriées.

Suivant l'invention on peut également réaliser des inserts dans des alliages faisant appel à plusieurs éléments bétagènes tels que par exemple du tantale du molybdène et du niobium. On a ainsi réalisé des inserts dans un alliage comportant ces trois éléments bétagènes suivant la formule : Ti₆Al₂Nb₁Ta₀₈Mo, c'est-à-dire que l'alliage à base de titane et de 6% d'aluminium comprend, en proportions massiques, 2% de niobium, 1% de tantale et 0,8% de molybdène. Les essais effectués ont montré que la transmission de l'énergie ultrasonore se situait au-dessus de celle obtenue avec des inserts de type classique en acier inoxydable mais au-dessous de celle obtenue avec un élément bétagène constitué exclusivement de niobium tel que l'alliage précédemment mentionné : Ti₆Al₇Nb.

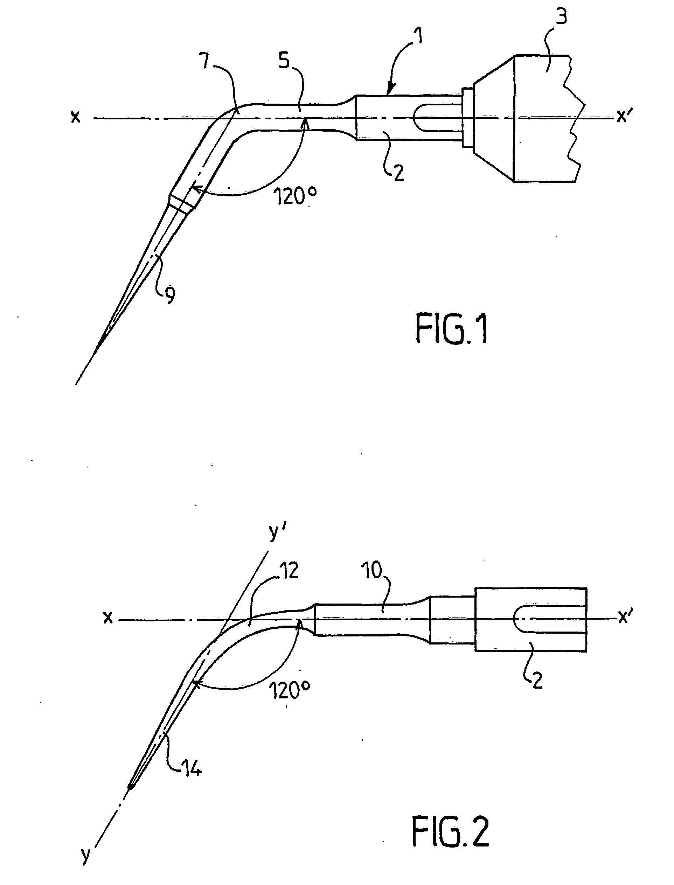

On a également établi que cet alliage était particulièrement approprié à la fabrication d'inserts notamment destinés à la mise en oeuvre d'interventions en dentisterie opératoire et dont la forme est par exemple telle que représenté sur la figure 1.

Sur celle-ci l'extrémité proximale de cet insert 1 est formée d'une partie cylindrique 2 par laquelle elle est destinée à se connecter sur une pièce à main ultrasonore 3 qui se continue vers son extrémité distale par une partie cylindrique 5 de plus faible diamètre formant un coude 7 à environ 120° de l'axe longitudinal xx' de l'insert suivi d'une zone conique 9 dont la base est d'un diamètre inférieur à celui de la partie cylindrique.

On a représenté sur la figure 2 un insert de parodontologie utilisé pour effectuer des traitements sous-gingivaux. Cet insert, qui est destiné à se connecter sur une pièce à main ultrasonore (non représentée sur le dessin), a une extrémité proximale cylindrique 2 qui se continue vers son autre extrémité par une seconde partie cylindrique 10 de plus faible diamètre qui se prolonge par une partie dont le diamètre diminue de façon continue jusqu'à sa pointe, ou extrémité distale, qui est formée de deux zones, à savoir une première zone 12 courbée suivant un rayon et une seconde zone 14 prolongeant la première qui est de forme conique et dont l'axe longitudinal yy' forme un angle d'environ 120° avec l'axe principal longitudinal xx' de l'insert.

## Revendications

1. Instrument dentaire, ou insert, du type mis en mouvement par des vibrations ultrasonores et constitué d'un alliage à base de titane et d'aluminium, et en ce qu'il comprend, en tant que composant, au moins un élément biocompatible bétagène, constitué de niobium et/ou de molybdène et/ou de tantale apte à générer au moins 40% de phase cristalline de structure cubique centrée.

2. Instrument dentaire suivant la revendication 1, et en ce que l'élément bétagène est constitué de niobium, son pourcentage en valeur massique dans l'alliage étant d'environ 7%.

3. Instrument dentaire suivant la revendication 2, et en ce qu'il est réalisé dans un alliage dont la formule est Ti₆Al₇Nb.

4. Instrument dentaire suivant l'une des revendications précédentes, et en ce que la structure cristalline de l'alliage est telle que les grains de celui-ci ont une dimension inférieure à 10µm.

5. Instrument dentaire suivant l'une des revendications précédentes, et en ce que sa forme est telle que son extrémité proximale est formée d'une partie cylindrique (2), par laquelle elle est destinée à se connecter sur une pièce à main ultrasonore (3) qui se continue vers son extrémité distale par une partie cylindrique (5) de plus faible diamètre formant un coude (7) à environ 120° de l'axe longitudinal (xx') de l'insert suivi d'une zone conique (9) dont la base est d'un diamètre inférieur à celui de la partie cylindrique.

6. Instrument dentaire suivant l'une des revendications 1 à 4, et en ce que sa forme est telle que son extrémité proximale(2) est cylindrique et se continue vers son autre extrémité par une seconde partie cylindrique (10) de plus faible diamètre qui se prolonge par une partie dont le diamètre diminue de façon continue jusqu'à sa pointe, ou extrémité distale, qui est partagée en deux zones, à savoir une première zone (12) courbée suivant un rayon et une seconde zone (14) prolongeant la première qui est de forme conique et dont l'axe longitudinal (yy') forme un angle d'environ 120° avec l'axe principal longitudinal (xx') de l'insert.

## Claims

1. A dental tool or insert, of the type set into motion by ultrasonic vibrations and consisting of an alloy based on titanium and aluminium, and in that it comprises, as a component, at least one betagenic biocompatible element, consisting of niobium and/or molybdenum and/or tantalum capable of generating at least 40% of a crystalline phase with a centered cubic structure.

2. The dental tool according to claim 1, and in that the betagenic element consists of niobium, its weight percentage in the alloy being about 7%.

3. The dental tool according to claim 2, and in that it is made in an alloy, the formula of which is Ti₆Al₇Nb.

4. The dental tool according to any of the preceding claims, and in that the crystalline structure of the alloy is such that the grains of the latter have a dimension less than 10 µm.

5. The dental tool according to any of the preceding claims, and in that its shape is such that its proximal end is formed with a cylindrical portion (2), through which it is intended to be connected onto an ultrasonic hand part (3) which continues towards its distal end with a cylindrical portion (5) of smaller diameter forming a bend (7) of about 120° from the longitudinal axis (xx') of the insert followed by a conical area (9), the base of which is of a diameter less than that of the cylindrical portion.

6. The dental tool according to any of claims 1 to 4, and in that its shape is such that its proximal end (2) is cylindrical and continues towards its other end with a second cylindrical portion (10) of smaller diameter which extends with a portion, the diameter of which continuously decreases up to its tip or distal end, which is divided into two areas, i.e., a first area (12) bent along a radius and a second area (14) extending the first, which is of conical shape and the longitudinal axis (yy') of which forms an angle of about 120° with the main longitudinal axis (xx') of the insert.

## Patentansprüche

1. Dentalinstrument oder dentales Einsatzteil vom Typ, der durch Ultraschallschwingungen in Betrieb gesetzt wird und aus einer Legierung auf der Basis von Titan und Aluminium gebildet ist und dass er als Bestandteil zumindest ein biokompatibles betagenes Element aufweist, das aus Niob und/oder Molybdän und/oder Tantal gebildet ist, das dazu in der Lage ist, mindestens 40 % kristalliner Phase einer kubisch zentrierten Struktur zu generieren.

2. Dentalinstrument nach Anspruch 1,
und dass das betagene Element aus Niob gebildet ist, wobei sein prozentualer Gehalt im Massenwert in der Legierung ungefähr 7 % beträgt.

3. Dentalinstrument nach Anspruch 2,
und dass es in einer Legierung der Formel Ti₆Al₇Nb ausgeführt ist.

4. Dentalinstrument nach einem der vorstehenden Ansprüche,
und dass die kristalline Struktur der Legierung derart ist, dass deren Körner eine Größe kleiner als 10 µm haben.

5. Dentalinstrument nach einem der vorstehenden Ansprüche,
und dass seine Form derart ist, dass sein proximales Ende aus einem zylindrischen Abschnitt (2) gebildet ist, durch den es dazu bestimmt ist, an einem Ultraschall-Handstück (3) angeschlossen zu werden, das sich in Richtung auf sein distales Ende durch einen zylindrischen Abschnitt (5) eines geringeren Durchmessers fortsetzt, der einen Winkel (7) von ungefähr 120° von der Längsachse (xx') des Einsatzteils bildet, gefolgt von einer konischen Zone (9), deren Basis einen Durchmesser aufweist, der kleiner als derjenige des zylindrischen Abschnitts ist.

6. Dentalinstrument nach einem der Ansprüche 1 bis 4,
und dass seine Form derart ist, dass sein proximales Ende (2) zylindrisch ist und sich in Richtung auf sein anderes Ende durch einen zweiten zylindrischen Abschnitt (10) eines geringeren Durchmessers fortsetzt, der sich durch einen Abschnitt ausdehnt, dessen Durchmesser sich kontinuierlich bis zu seiner Spitze oder seinem distalen Ende verringert, der in zwei Zonen aufgeteilt ist, nämlich einer ersten Zone (12), die gemäß einem Radius gekrümmt ist, und einer zweiten Zone (14), die die erste verlängert, die eine konische Form aufweist und deren Längsachse (yy') einen Winkel von ungefähr 120° mit der Hauptlängsachse (xx') des Einsatzteils bildet.
